# EUROPEAN PATENT APPLICATION

(11) **EP 4 838 781 A1**
(43) Date of publication of application: **11.11.2026**
(21) Application number: 26176869.1
(22) Date of filing: 06.05.2026
(51) Int. Cl.: H02S 30/10

(54) **HOLE-LESS PANEL FRAME**

(30) Priority: 08.05.2025 US 202563802107 P
(71) Applicant: DS2.0, LLC, Portland, TN 37148 (US)
(72) Inventor: SOLON, Dean, Portland, TN 37148 (US); SUEZ, Itai, Portland, TN 37148 (US); MORGAN, Anthony Lee, Portland, TN 37148 (US)
(74) Representative: Fish & Richardson P.C.

(57) **Abstract**

This disclosure describes solutions for reinforcing solar panels and mounting them to a racking structure. This can include a vertical outer wall defining a first side of the panel frame; a first protrusion, a second protrusion, and a third protrusion, wherein: the first protrusion defines a bottom of the panel frame; the second protrusion defines a top of the panel frame; the third protrusion is located between the first protrusion and the second protrusion; a void defined by the vertical outer wall, the second protrusion and the third protrusion, the void defining a panel slot configured to receive a solar panel; and a mounting tab defined by a second portion of the first protrusion that is further away from the vertical outer wall than the rectangular structure.

## Description

### CLAIM OF PRIORITY

This application claims priority to U.S. Provisional Application No. 63/802,107, filed on May 8, 2025. The disclosure of the prior application is considered part of and is incorporated by reference in the disclosure of this application.

### BACKGROUND

Solar arrays made up of multiple photovoltaic modules (referred to as "panels" for brevity) are often installed in a series electrical string configuration. Ground-mounted photovoltaic solar panel arrays are often installed on racking systems using pile foundations. The panels in the array can be configured to tilt in order to track the sun and increase the electrical power generated by the solar panels. This solar tracking can be implemented using a shaft or series of coupled shafts that rotate the panels.

### SUMMARY

The present disclosure involves methods, systems, and an apparatus for reinforcing solar panels and mounting them to a racking structure. This can include a vertical outer wall defining a first side of the panel frame; a first protrusion, a second protrusion, and a third protrusion, each extending away from the vertical outer wall in a same direction, wherein: the first protrusion defines a bottom of the panel frame; the second protrusion defines a top of the panel frame; the third protrusion is located between the first protrusion and the second protrusion; a void defined by the vertical outer wall, the second protrusion and the third protrusion, the void defining a panel slot configured to receive a solar panel; a rectangular structure defined by a first portion of the vertical outer wall, a first portion of the first protrusion, a first portion of the third protrusion, and an inner vertical member; and a mounting tab defined by a second portion of the first protrusion that is further away from the vertical outer wall than the rectangular structure, wherein a middle section of the mounting tab is formed without holes.

Implementations can optionally include one or more of the following features.

In some instances, the middle section of the mounting tab comprises the center 75% of the mounting tab between a first end of the panel frame and a second end of the panel frame.

In some instances, the frame comprises a reinforcement extending vertically away from the mounting tab and toward the panel slot.

In some instances, the mounting tab extends from a side of the rectangular cross section.

In some instances, a reinforcement extends from the mounting tab to the inner vertical member at an acute angle.

In some instances, the frame is formed of extruded aluminum.

In some instances, structural members of the frame that connect to a panel are formed without panel mounting holes.

In some instances, the frame comprises one or more mounting clips, movably secured to the mounting tab, wherein the mounting clips are configured to secure the frame to a support structure at any location in the middle section of the mounting tab.

The subject matter discussed herein can provide one or more of the following advantages. One advantage of this system is that by using rear-mounted clips (or clasps) instead of mounting holes for through-bolt fastening to solar panel frames, the sub-structure, which often includes a supporting rail or bracket, can be selected that is a length tailored specifically to the design load requirements of the panel install. Another advantage is that by removing holes or perforations from the frame structure, the frame's strength and rigidity is increased. Further, by removing the holes, additional reinforcing members can be installed in their place, thereby increasing the strength of the frame even more.

The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

FIGS. 1A and 1B depict an example panel with a reinforcing frame.
FIGS. 2A and 2B illustrate a perspective, cutaway view of a reinforcing frame.
FIGS. 3A-3C illustrate a side, cutaway views of reinforcement frame embodiments.

### DETAILED DESCRIPTION

This disclosure describes implementations for a solar panel frame that has increased rigidity and is more flexibly installed on different substructures. Mounting solar panels onto various racking structures (e.g., rooftop, fixed ground mount, trackers, solar canopies, etc.) and making them a universal fit for all possible fastening hardware has resulted in module frames that are designed with standardized hole positions around the perimeter of the rear flange of a solar panel frame. The presence of these standardized hole positions weakens the structural integrity of the module frame and in many cases engineering compromises are necessary to permit projects with test loads well below the required design loads with corresponding safety factors. When failures occur in the field due to high wind events and snow loads, the failures routinely occur between the module frame and the substructure.

This disclosure describes a solution to eliminate mounting holes in the module frame in order to strengthen and provide increased flexibility in mounting designs. The supporting sub-structures need only be able to be attached using glide-in/slide-in fasteners or clips which are readily commercially available products. Example fasteners can include but are not limited to the glide-in CAMO clamp by Ironridge, the V-Clamp by VESPR, PowAR Cinch climp by ARaymond, and/or the PanelClaw FR by Enstall.

One advantage of this system is that by using clips instead of mounting holes, the sub-structure, which often includes a supporting rail or bracket, can be selected that is a length tailored specifically to the design load requirements of the panel install.

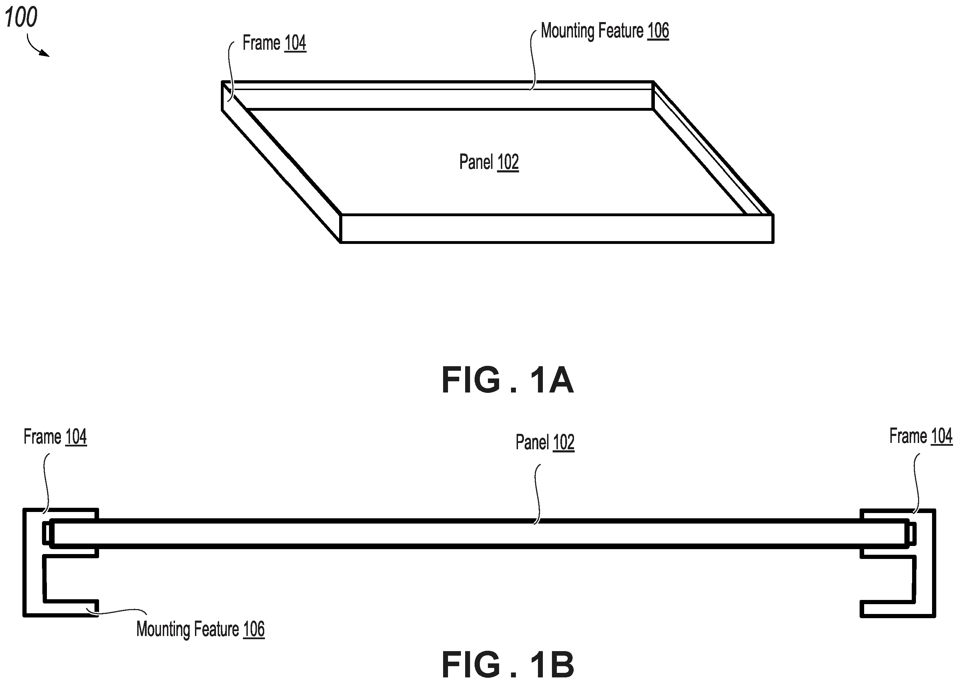

FIGS. 1A and 1B depict an example panel with a reinforcing frame. In FIG. 1A, the panel 102 can be a glass, or crystalline silicon (c-Si) panel. To make a solar panel structurally suitable for installation, a frame 104 is added to increase overall rigidity and distribute the front and rear mechanical load on the panel when mounted to a sub-structure (e.g., a rooftop rail, torque tube, etc.). In some implementations, the frame 104 surrounds the panel on all four edges (as illustrated). In some implementations, only two edges, adjacent or opposite are framed, reducing the required materials while still providing increased strength and a mounting point for the panel 102. A mounting feature 106 can be included on the frames 104. In some implementations, the rear flange protrudes from the frame 104 parallel to the panel 102 and includes additional structural elements. In some implementations, the frame 104 is constructed of rolled steel, extruded aluminum, or other suitable material. A shown in FIG. 1B, the frame can have an "E" shape in which the rear flange/mounting feature 106 is one of three protrusions that extend away from a vertical member that is connected to a same edge of each protrusion. In this configuration, the space between two of the protrusions, such as a middle and top protrusion, is selected based on the thickness of the panel 102. For example, the space between the two protrusions can be substantially the same (e.g., within +/- 5% or another specified tolerance threshold) as the thickness of the panel 102.

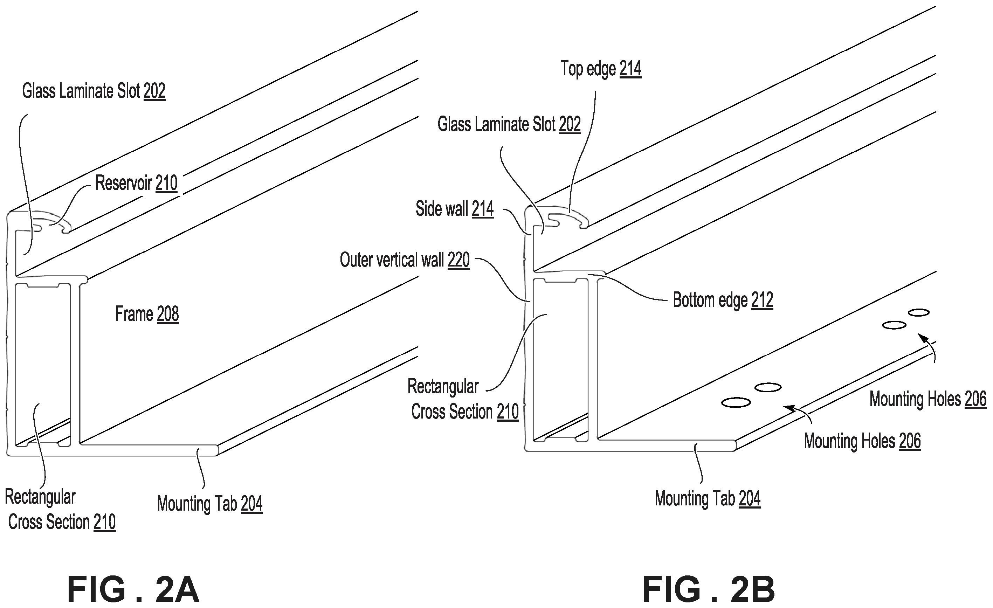

FIGS. 2A and 2B illustrate a perspective, cutaway view of an example reinforcing frame 208. The illustrated frame 208 includes a rectangular cross section 210, with a slot for the solar glass laminate 202 at the top, and a mounting tab 204 near the bottom. The rectangular cross section enables high rigidity and strength for a relatively low amount of material used. In some implementations, other shapes, such as triangles, internal trusses, cross-members, or other elements are possible. The slot for the solar glass laminate 202 is located in a top 1/3 section of the frame, and is configured to receive a solar glass laminate or panel, such as the panel 102 discussed above. The panel slot has a bottom edge 212, a side wall 214, and a top edge 216. Together, the bottom edge 212, side wall 214, and top edge 216 define the void that is referred to as the glass laminate slot 202. In some implementations, a reservoir 210 can be formed within the top edge 216. The reservoir 210 can be a space/void designed to receive excess sealant or adhesive during installation onto a solar glass laminate panel. For example, as illustrated by FIG. 2A, the reservoir is a void formed within an upper most protrusion of the frame 208. During installation, the glass laminate slot 202 can be lined with a bead of adhesive/sealant, and then pressed onto a panel. During the pressing, the sealant/adhesive will spread into reservoir 210, without spilling onto the front of the panel and potentially obscuring a portion of the panel. It should be noted that glass laminate slot 202 can be flared or fluted, in order to encourage spreading of adhesive or sealant around the edges of the panel. In some implementations, the reservoir 210 can extend the full length of the frame 208. In other implementations, the reservoir 210 can extend less than the full length to the frame 208 and/or be formed at discrete sections along the length of the frame 208 (e.g., 500mm length voids spaced 100mm apart). In some implementations, the glass laminate slot 202 and dimensions of the reservoir 210 are selected such that the panel will friction fit into the slot 202 with adhesive providing the necessary retention. In these implementations, no additional fasteners or securing mechanisms are required and the members of the frame 208 that connect to the panel do not have any mounting holes.

The rear flange or mounting tab 204, as illustrated in FIGs. 2A and 2B is a bottom most protrusion of the frame 208 that protrudes from the rectangular cross section 210 of the frame 208. The mounting tab 204 and a bottom side of the rectangular cross section 210 form a bottom side of the frame 208. The outer vertical wall 220 is a structural member of the frame 208 that is connected to each of three horizontal protrusions that extend away from the outer vertical wall 220. As used throughout this document, the bottom of the frame 208 is the edge furthest from the glass laminate slot 202 and includes a bottom of the rectangular cross section 210 and the mounting tab 204. As shown in FIG. 2A, the mounting tab 204 protrudes further away from the outer vertical wall 220 than either of the other two protrusions that define the bottom edge 212 of the glass laminate slot 202 and the top edge 216 of the glass laminate slot 202.

The mounting tab 204 can, in some implementations, include mounting holes 206. The mounting holes 206 can be positioned at the ends or corners of the frame 208, or generally at pre-defined locations for ease in installation onto a sub-structure. It should be noted that generally mounting holes 208 will reduce the structural integrity of the mounting tab 204 and the frame 208 due to the nature of the mechanical fastening occurring at a point load. Further, holes 208 can prevent installation of additional reinforcing members on the mounting tab 204 or between the mounting tab 204 and the rectangular portion of the frame. FIG. 2A illustrates an example with no mounting holes. The frame 208 of FIG. 2A can be clipped, snapped, or friction fit to a sub-structure using one or more mechanisms such as the glide-in CAMO clamp by Ironridge, the V-Clamp by VESPR, PowAR Cinch climp by ARaymond, and/or the PanelClaw FR by Enstall. In some implementations, mounting holes 206 are not present in mounting tab 204. In some implementations, mounting holes 206 are only present at the extreme ends of the mounting tab 204 (e.g., corresponding to the corners of the solar panel 102 of FIGS. 1A-1B). That is, a middle portion of the mounting tab 204, toward a centerline of an installed solar panel, has no mounting holes 204, and instead mounting is performed using friction/slide-in fasteners. In some implementations, the middle 75% of the mounting tab 204 does not have any mounting holes 206. Alternatively, in some implementations, the middle 60%, or the middle 50% of the mounting tab 204 does not have mounting holes 206. Further, in some implementations, the middle 90% or middle 95% does not have mounting holes 206. And in some implementations, no mounting holes are present anywhere on mounting tab 204. This can improve the structural integrity of the frame 208 and provide for increased flexibility when mounting to a sub-structure by allowing clips or other securing mechanisms to be placed at any position along the mounting tab instead of being bolted at pre-defined hole locations.

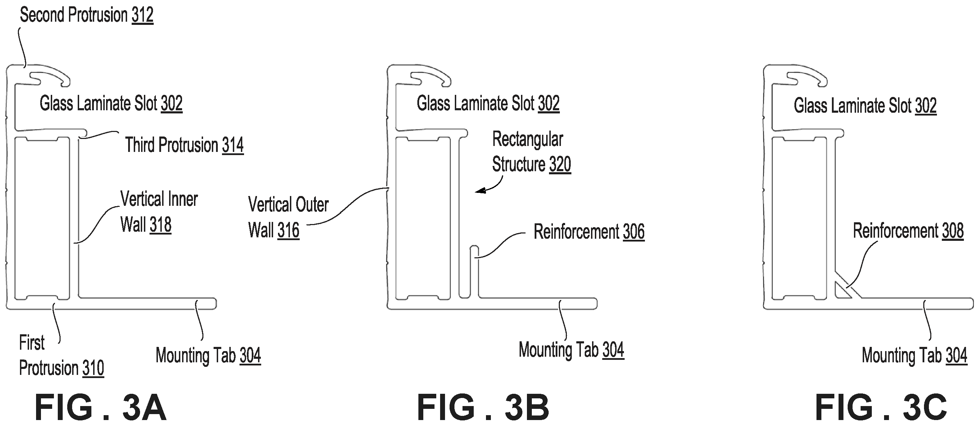

FIGS. 3A-3C illustrate a side, cutaway views of reinforcement frame embodiments. FIG. 3A illustrates a standard frame cross section with a rectangle 308, glass laminate slot 302, and a mounting tab 304. FIG. 3B illustrates a similar frame with an additional reinforcement bar 306, extending vertically away from the mounting tab 304. The reinforcement bar 306 is shown being located further away from the vertical outer wall 316 than the edges of the rectangle 308 that intersect the bottom of the frame. The reinforcement bar 306 is also shorter than the edges of the rectangle 320 that intersect the bottom of the frame. This reinforcement bar 306 provides additional rigidity of the mounting tab 304 and can interface with clips to provide reliable mounting to sub-structures.

FIG. 3C illustrates a frame with a reinforcement member 308 that extends from the mounting tab 304 to the rectangular section of the frame at an acute angle (e.g., 45 degrees). This enables the mounting tab 304 to more efficiently transfer loads into the main structure of the frame, increasing overall strength. In some implementations, neither reinforcement 306 nor reinforcement 308 are feasible when holes are used in the mounting tab 304 to mount the frame to a sub-structure.

In each of the illustrated examples, the panel frame is defined by a vertical outer wall 316 defining a left side of the frame in the illustrated examples, a first protrusion 310 defining a bottom of the frame in the illustrated examples, a second protrusion 312 defining a top of the frame in the illustrated examples, a third protrusion which defines a bottom of the glass laminate slot 302 and a top of the rectangular structure 320, and a vertical inner wall 318. The rectangular structure 320 is defined by a portion of the third protrusion 314, a portion of the first protrusion 310, the vertical inner wall 318, and a portion of the vertical outer wall 316. In general, the rectangular structure 320 provides structural support and rigidity to stiffen the overall panel and frame combination and support mounting loads.

Although this disclosure has been described in terms of certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure.

The foregoing description is provided in the context of one or more particular implementations. Various modifications, alterations, and permutations of the disclosed implementations can be made without departing from scope of the disclosure. Thus, the present disclosure is not intended to be limited only to the described or illustrated implementations but is to be accorded the widest scope consistent with the principles and features disclosed herein.

## Claims

1. A solar panel frame comprising:
a vertical outer wall defining a first side of the panel frame;
a first protrusion, a second protrusion, and a third protrusion, each extending away from the vertical outer wall in a same direction, wherein:
the first protrusion defines a bottom of the panel frame;
the second protrusion defines a top of the panel frame;
the third protrusion is located between the first protrusion and the second protrusion;
a void defined by the vertical outer wall, the second protrusion and the third protrusion, the void defining a panel slot configured to receive a solar panel;
a rectangular structure defined by a first portion of the vertical outer wall, a first portion of the first protrusion, a first portion of the third protrusion, and an inner vertical member; and
a mounting tab defined by a second portion of the first protrusion that is further away from the vertical outer wall than the rectangular structure, wherein a middle section of the mounting tab is formed without holes.

2. The solar panel frame of claim 1, wherein the middle section of the mounting tab comprises the center 75% of the mounting tab between a first end of the panel frame and a second end of the panel frame.

3. The solar panel frame of any preceding claim, comprising: a reinforcement extending vertically away from the mounting tab and toward the panel slot.

4. The solar panel frame of any preceding claim, wherein the mounting tab extends from a side of the rectangular cross section.

5. The solar panel frame of claim 4, wherein a reinforcement extends from the mounting tab to the inner vertical member at an acute angle.

6. The solar panel frame of any preceding claim, wherein the frame is formed of extruded aluminum.

7. The solar panel frame of any preceding claim, wherein structural members of the frame that connect to a panel are formed without panel mounting holes.

8. The solar panel frame of any preceding claim, comprising one or more mounting clips, movably secured to the mounting tab, wherein the mounting clips are configured to secure the frame to a support structure at any location in the middle section of the mounting tab.

9. A photovoltaic module comprising the solar panel frame of any preceding claim and a solar panel.
